# DEMANDE DE BREVET EUROPEEN

(11) **EP 0 747 580 A1**
(43) Date de publication de la demande: **11.12.1996**
(21) Numéro de dépôt: 96410068.9
(22) Date de dépôt: 04.06.1996
(51) Int. Cl.: F01N 3/02, G01N 27/407

(54) **Perfectionnement pour dispositif d'échappement d'un moteur à combustion interne**

(30) Priorité: 06.06.1995 FR 9506886; 11.01.1996 FR 9600456
(71) Demandeur: CHETWOOD INTERNATIONAL S.A., Nueva Urbanization Obarrio, Panama City (PA)
(72) Inventeur: Saighi, Steve, 74370 Argonay (FR)
(74) Mandataire: Gasquet, Denis

(57) **Abrégé**

Elément pour dispositif d'échappement de moteur à combustion interne (1), caractérisé en ce qu'il est constitué par un filtre (7) destiné à retenir les impuretés contenues dans le flux du gaz d'échappement (8).

## Description

La présente invention concerne un élément pour dispositif d'échappement d'un moteur à combustion interne.

Dans la plupart des cas, pour ne pas dire tous, les véhicules automobiles ont un système d'échappement permettant aux gaz d'échappement d'être évacués dans l'atmosphère dans les meilleures conditions possibles. Il est constitué par un collecteur connecté aux différents cylindres, prolongés par un conduit d'échappement comprenant un pot d'échappement.

On sait que les gaz d'échappement d'un moteur à combustion interne contiennent un grand nombre de composés chimiques dont chacun présente un certain niveau de toxicité ou de pollution.

Pour réduire le niveau de pollution, il a déjà été proposé d'installer sur le conduit d'échappement un pot catalytique qui renferme certains composés catalytiques destinés à transformer par catalyse certains composés chimiques polluants contenus dans les gaz d'échappement, et de placer ensuite, par exemple, une sonde lambda dans le conduit d'échappement du moteur, la sonde lambda étant conçue pour détecter la concentration d'un ou plusieurs composés chimiques spécifiques et fournir des signaux électriques représentatifs de cette concentration. Mais on sait que les pots d'échappement ainsi que les sondes lambda sont vite détériorés par les impuretés contenues dans les gaz d'échappement.

La présente invention a pour objet de supprimer les inconvénients rencontrés avec les dispositifs traditionnels en proposant de mettre en place dans le circuit des gaz d'échappement un filtre destiné à retenir au moins certaines impuretés.

Ainsi, l'invention concerne un élément pour dispositif d'échappement de moteur à combustion interne, qui est caractérisé en ce qu'il est constitué par un filtre destiné à retenir les impuretés contenues dans le flux du gaz d'échappement.

Selon une caractéristique complémentaire, le filtre est constitué par un matériau poreux imprégné d'oxyde de terres rares ou lanthanides.

Selon une autre caractéristique, le matériau constituant le filtre est de l'acier inoxydable fritté mais peut être constitué de tout autre support.

Dans l'un des modes de réalisation, le filtre est un disque disposé dans le conduit d'échappement, ou dans le conduit de sortie du collecteur, voire au niveau de l'assemblage du collecteur et du conduit d'échappement. Tandis que dans un autre mode de réalisation, le filtre est un capot de protection pour l'élément de détection d'une sonde lambda disposée dans le conduit d'échappement.

D'autres caractéristiques et avantages de l'invention se dégageront de la description qui va suivre en regard des dessins annexés qui ne sont donnés qu'à titre d'exemples non limitatifs

La figure 1 illustre schématiquement un premier mode d'exécution d'un dispositif d'échappement selon l'invention.

La figure 2 représente plus en détail le montage du filtre de l'invention.

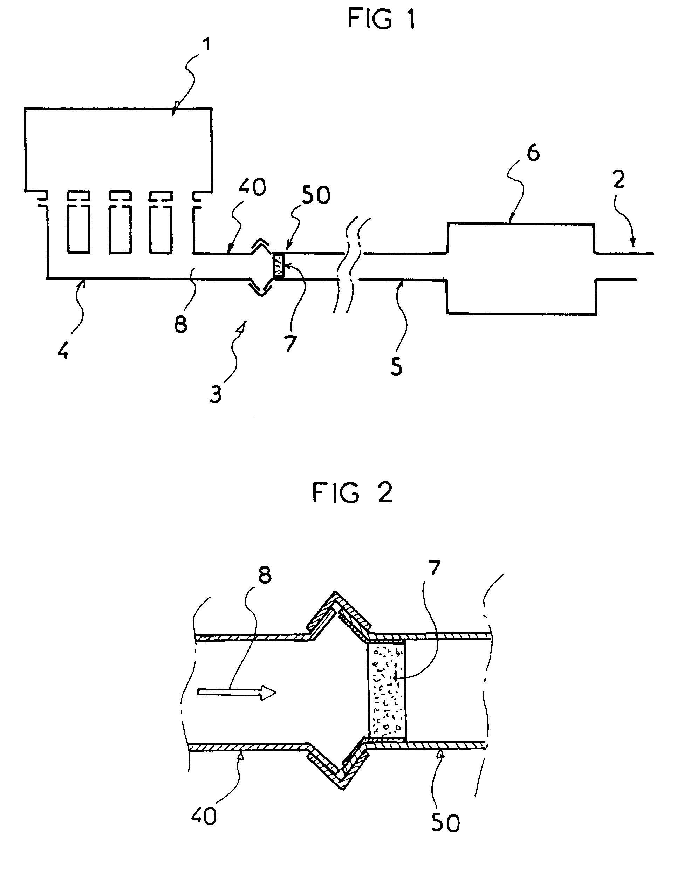

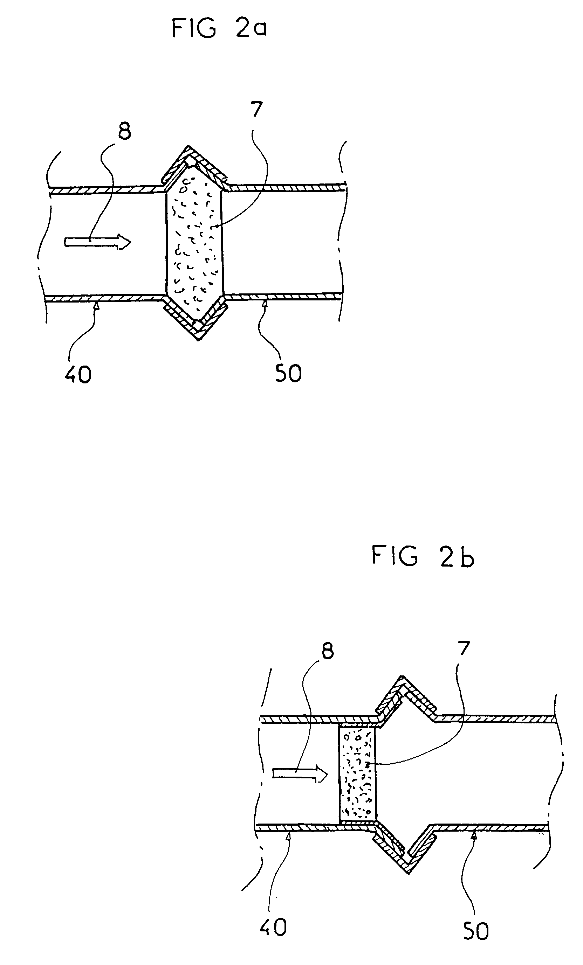

Les figures 2 et 2a représentent des variantes de montage pour le filtre.

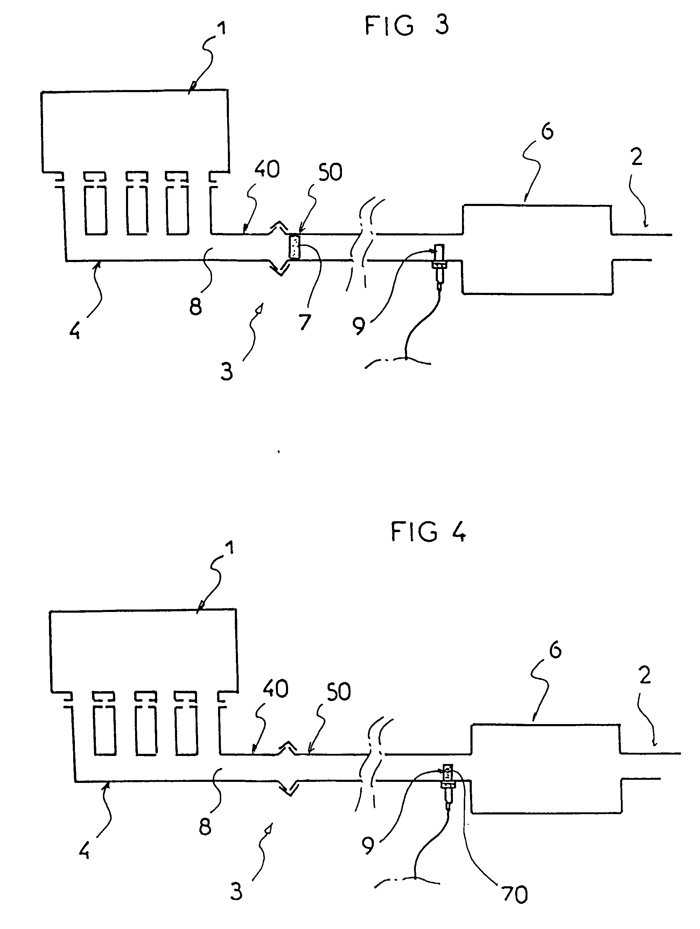

La figure 3 illustre dans une vue similaire à la figure 1 un dispositif d'échappement avec le filtre de l'invention et comprenant une sonde lambda avec un pot catalytique.

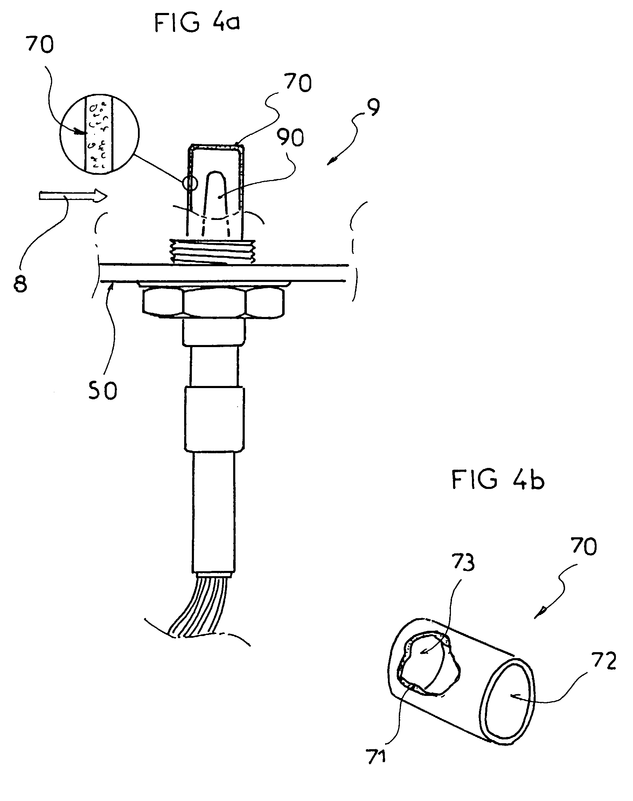

Les figures 4, 4a et 4b représentent une variante d'exécution selon laquelle la sonde lambda est protégée par un filtre.

La figure 4 est une vue similaire aux figures 1 et 3.

La figure 4a est une vue de détail avec une coupe partielle.

La figure 4b illustre plus particulièrement le filtre de la variante.

De façon connue en soi et tel qu'illustré à la figure 1, les gaz d'échappement d'un moteur à explosion (1) sont évacués dans l'atmosphère (2) par un dispositif d'échappement (3) constitué par un collecteur (4) connecté aux différents cylindres prolongés par un conduit d'échappement (5) comprenant un pot d'échappement (6).

Selon le premier mode d'exécution et sa variante tel qu'illustré aux figures 1 à 4, il est prévu un filtre (7) destiné à retenir les impuretés rejetées par les gaz de combustion (8). Le filtre est avantageusement chimique et est placé, par exemple, entre le collecteur (4) et le conduit d'échappement (5), tel qu'illustré à titre d'exemple. Le filtre est dans ce mode d'exécution constitué par un disque réalisé avec un matériau poreux comme, par exemple, en acier inoxydable fritté, imprégné d'un dépôt d'oxyde de terres rares ou lanthanides. Le disque peut être simple ou posséder une structure de type nid d'abeille, il peut également prendre toute autre forme qui maximise la surface disponible pour recevoir les impuretés.

Le filtre (7) est disposé dans le flux de gaz d'échappement (8), comme, par exemple, à l'intérieur de l'extrémité amont (50) du conduit d'échappement (5), comme cela est illustré aux figures 1 et 2. Mais il peut être disposé entre la sortie du collecteur (40) et l'extrémité amont (50) du conduit d'échappement, comme cela est illustré à la figure 2a, c'est-à-dire au niveau de l'assemblage dudit collecteur et du conduit d'échappement. Ledit filtre (7) pouvant aussi être disposé dans le conduit (40) de sortie de collecteur, comme cela est représenté de façon schématique à la figure 2b.

Il va de soi que le filtre (7) peut être utilisé dans un échappement comprenant une sonde lambda (9) disposée dans le conduit d'échappement (5) tel qu'illustré à la figure 3. La sonde étant destinée à détecter la concentration d'un ou plusieurs composés chimiques spécifiques et fournir des signaux électriques représentatifs de cette concentration captée. Ainsi, le filtre (7) retient les impuretés rejetées par les gaz d'échappement avant que le flux de ces gaz ne soit en contact avec l'élément de détection de la sonde.

On comprend l'intérêt du filtre quand on sait que sans le filtre, cette dernière, du fait des impuretés, se détériore progressivement mais rapidement par dépôt des impuretés à sa surface, la vitrification qui finit par se reproduire du fait des températures élevées s'y développant.

Les figures 4 et 4a représentent une variante d'exécution selon laquelle la sonde lambda (9) est directement protégée par un filtre (70) constitué par un capot ayant la forme d'un manchon protégeant l'élément de détection (90). Comme pour le filtre (7) du mode de réalisation précédent, le capot est réalisé, par exemple, par frittage en acier inoxydable dont au moins la surface extérieure est imprégnée de terres rares ou lanthanides. Le manchon (70) est, par exemple, de forme cylindrique et constitué par une paroi périphérique (71) formant un logement (72) pour l'élément de détection (90) et qui est fermé à son extrémité par une paroi d'extrémité (73).

L'imprégnation du filtre se fait, par exemple, par trempage dans une solution de terres rares suivi d'un séchage. Notons que la porosité du filtre réalisé par frittage permet, d'une part, l'imprégnation de la matière et, d'autre part, de jouer le rôle de filtre proprement dit. Parmi les terres rares ou lanthanides, on peut utiliser au moins un élément constitué par l'un des éléments suivants : La, Ce, Pr, Nd, Pm, Sm, Eu, Gd, Tb, Dy, Mo, Er, Tm, Yb, Lu.

Selon une variante non représentée, le dispositif peut posséder des moyens de chauffage du filtre permettant d'obtenir une température comprise entre 200° et 700°, avantageusement entre 300° et 500°. Ces moyens de chauffage peuvent être ceux utilisés éventuellement pour chauffer la sonde lambda.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Elément pour dispositif d'échappement (3) de moteur à combustion interne (1), caractérisé en ce qu'il est constitué par un filtre (7, 70) destiné à retenir les impuretés contenues dans le flux du gaz d'échappement (8).

2. Elément pour dispositif d'échappement de moteur à combustion interne (1) selon la revendication 1, caractérisé en ce que le filtre (7, 70) est constitué par un matériau poreux imprégné d'oxyde de terres rares ou lanthanides.

3. Elément pour dispositif d'échappement de moteur à combustion interne (1) selon la revendication 2, caractérisé en ce que le matériau constituant le filtre (7, 70) est de l'acier inoxydable fritté.

4. Elément pour dispositif d'échappement de moteur à combustion interne (1) selon la revendication 3, caractérisé en ce que le filtre (7) est un disque disposé dans le conduit d'échappement (5).

5. Elément pour dispositif d'échappement de moteur à combustion interne (1) selon la revendication 3, caractérisé en ce que le filtre (7) est un disque disposé dans le conduit de sortie (4) du collecteur.

6. Elément pour dispositif d'échappement de moteur à combustion interne (1) selon la revendication 3, caractérisé en ce que le filtre (7) est disposé au niveau de l'assemblage du collecteur et du conduit d'échappement (5).

7. Elément pour dispositif d'échappement de moteur à combustion interne (1) selon l'une quelconque des revendications 1 à 3, caractérisé en ce que le filtre (70) est un capot de protection pour l'élément de détection (90) d'une sonde lambda (9) disposée dans le conduit d'échappement (5).

8. Elément pour dispositif d'échappement de moteur à combustion interne (1) selon l'une quelconque des revendications 1 à 7 caractérisé en ce que le filtre possède une structure de type nid d'abeille.
